# FASCICULE DE BREVET EUROPEEN

(11) **EP 0 955 385 B1**
(45) Date de publication et mention de la délivrance du brevet: **04.09.2002**
(21) Numéro de dépôt: 99401075.9
(22) Date de dépôt: 03.05.1999
(51) Int. Cl.: C22C 9/01

(54) **Cupro-alliage notamment pour la fabrication de fourchettes de boîte de vitesses**
Kupferlegierung, insbesondere für die Herstellung von Schaltgabeln
Copper-base alloy, suitable for the manufacture of gearshift forks

(30) Priorité: 07.05.1998 FR 9805803
(43) Date de publication de la demande: 10.11.1999
(73) Titulaire: BRONZE ACIOR S.A., 27750 La Couture-Boussey (FR)
(72) Inventeur: Leprat, Rémi, 27540 Ivry la Bataille (FR)
(74) Mandataire: Leszczynski, André

(56) Documents cités:
- DE-C- 733 166
- GB-A- 1 085 180

## Description

La présente invention est relative à un cupro-alliage pour la réalisation de pièces mécaniques, notamment de fourchettes de boîte de vitesses de véhicules, présentant une résistance au frottement améliorée.

Les boîtes de vitesses de type mécanique, comportent habituellement un arbre primaire solidaire du moteur par l'intermédiaire de l'embrayage et un arbre secondaire relié aux roues motrices.

L'arbre primaire porte un pignon en prise avec un engrenage d'un arbre intermédiaire disposé en parallèle de l'arbre principal et de l'arbre secondaire, l'arbre intermédiaire portant autant d'engrenages que de combinaisons voulues pour la boîte de vitesses.

L'arbre secondaire est muni de couronnes ou pignons dits "baladeurs" ou "manchons" qui peuvent coulisser le long de l'arbre tout en restant entraînés par lui au moyen de cannelures.

Par action sur le levier de changement de vitesses, on sélectionne un baladeur ou manchon correspondant au rapport de vitesses souhaité, ce baladeur étant alors verrouillé sur un engrenage de l'arbre intermédiaire assurant la prise avec l'arbre moteur.

Cette sélection du baladeur ou manchon s'effectue par l'intermédiaire d'une pièce appelée fourchette, mobile le long d'un axe parallèle aux arbres portant les pignons de la boîte de vitesses.

La fourchette comporte habituellement deux bras au bout de chacun desquels se situe un patin ou bec qui assure le contact avec le baladeur ou manchon lors du passage de la vitesse. Les patins, du fait de la rugosité et de la vitesse de rotation élevée du baladeur, sont soumis à des frottements importants.

La lubrification de l'ensemble se fait habituellement, soit par barbotage, soit par pulvérisation d'huile.

Les fourchettes doivent présenter de bonnes propriétés mécaniques, notamment en ce qui concerne la charge de rupture, la limite élastique et les possibilités d'allongement pour éviter la casse en fonctionnement et en outre présenter une bonne résistance au frottement notamment au niveau des patins.

Pour la réalisation de fourchettes dans les véhicules modernes, aussi bien les véhicules automobiles que les véhicules industriels ou à deux roues, on utilise des fourchettes en des alliages métalliques tels que des fontes, des alliages légers d'aluminium et des cupro-alliages et notamment des alliages cuivre/aluminium.

Les fourchettes en ces alliages sont réalisées par moulage en étant coulées par gravité dans un moule métallique ou "coquille".

Pour améliorer la résistance au frottement des fourchettes, notamment au niveau des patins amenés à frotter sur les baladeurs, on procède habituellement à un traitement de revêtement de la fourchette par nickel chimique ou molybdène.

Cette opération est coûteuse et augmente le temps de fabrication de la fourchette du fait de la reprise nécessaire de la pièce pour réaliser le traitement.

La présente invention se propose de fournir un cupro-alliage, de type cuivre-aluminium, permettant de réaliser des pièces mécaniques, notamment des fourchettes de boîte de vitesses offrant une résistance au frottement très supérieure à celle des pièces réalisées en cupro-alliages traditionnels et comparable à celle des pièces réalisées en cupro-alliages traditionnels et ayant été soumises à un traitement de revêtement par nickel chimique ou molybdène.

Le cupro-alliage selon la présente invention se caractérise par le fait qu'il présente la composition suivante en pourcentage en poids :

| | | | |
|---|---|---|---|
| Al | 7,5 | à | 9,0 |
| Fe | 0 | à | 2,0 |
| Ni | 3 | à | 4,5 |
| Pb ou Bi | 0,2 | à | 0,6 |
| Zn 0,6 à 1,4 ou Sn | 1,2 | à | 2,8 |
| Si | 0,25 | à | 0,50 |

le reste étant constitué par du cuivre et des impuretés inévitables, la teneur en impuretés étant inférieure à 0,5.

Par rapport aux alliages cuivre/aluminium traditionnellement utilisés pour la fabrication de fourchettes de boîte de vitesses qui comportent du fer ou du fer et du nickel, l'alliage selon la présente invention se caractérise notamment par la présence dans des proportions spécifiées de composants, tels que le zinc ou l'étain et le silicium et en outre par la présence de plomb ou de bismuth, ces derniers, finement répartis dans la masse de l'alliage favorisant, du fait de leurs propriétés lubrifiantes, une bonne tenue en frottement au fur et à mesure de l'usure.

L'alliage selon l'invention appartient à la catégorie des alliages monophasés complexes associant, du fait de la présence des composants mentionnés ci-dessus, des structures fines homogènes contenant des phases tendres avec des précipités et inclusions de points durs.

On va maintenant décrire en référence au dessin annexé des tests comparatifs d'usure de fourchettes de boîte de vitesses.

Sur le dessin :
- la figure 1 est une vue très schématique d'un banc d'essai permettant de réaliser des tests d'usure de fourchettes de boîte de vitesses,
- la figure 2 illustre sous forme graphique le résultat de tests comparatifs dits de "cycle d'endurance très long",
- la figure 3 illustre sous forme graphique le résultat de tests comparatifs dits "d'effort exceptionnel".

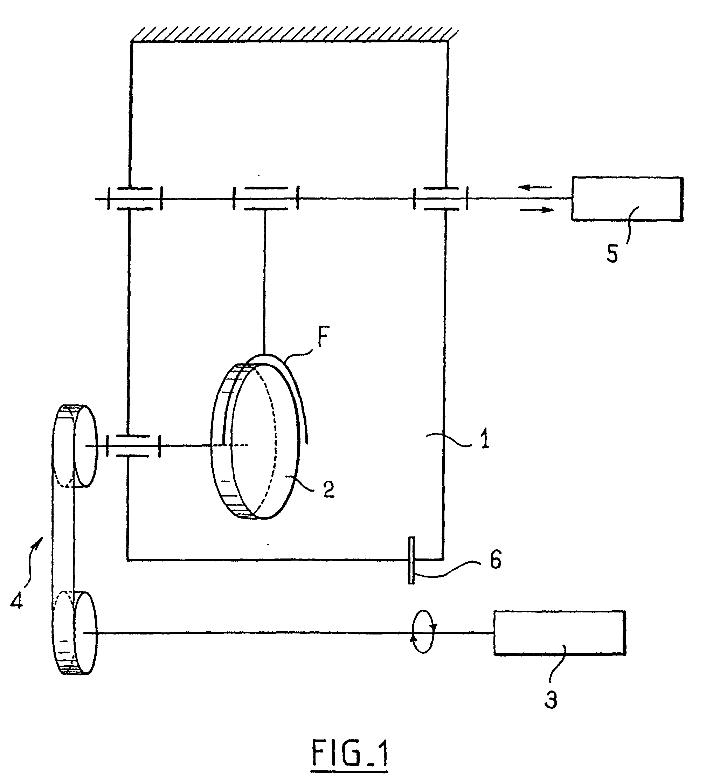

Le banc d'essai illustré à la figure 1 se compose essentiellement d'un carter 1 contenant de l'huile et à l'intérieur duquel un baladeur 2 est entraîné en rotation par un moteur 3 par l'intermédiaire d'une transmission à courroie 4.

Une fourchette F à tester est déplacée en translation sous l'action d'un vérin 5 et la température de l'huile du carter est mesurée par une sonde calorifique 6.

Le banc d'essai reproduit les conditions de fonctionnement que l'on peut retrouver à l'intérieur d'une boîte de vitesses, les tests devant mesurer l'usure des patins de la fourchette F frottant contre le baladeur 2.

Les tests réalisés par le déposant sont les tests de qualification généralement requis par les constructeurs de véhicules, l'usure devant être maintenue en dessous d'une certaine valeur spécifique à la fois lors d'un cycle d'endurance très long (plus de 500000 cycles de manoeuvre de la fourchette contre le baladeur) et pour des efforts exceptionnels violents de courte durée (force d'appui supérieure ou égale à 160 daN). Pour ces tests, la rugosité du baladeur a été choisie relativement importante, supérieure à 4 µm (norme NF ISO 12085).

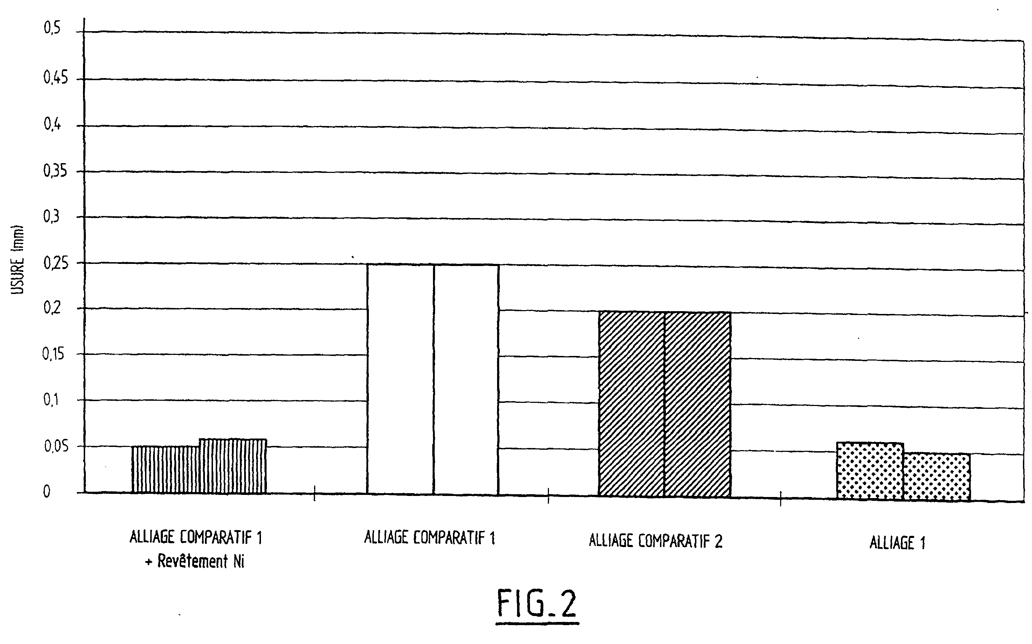

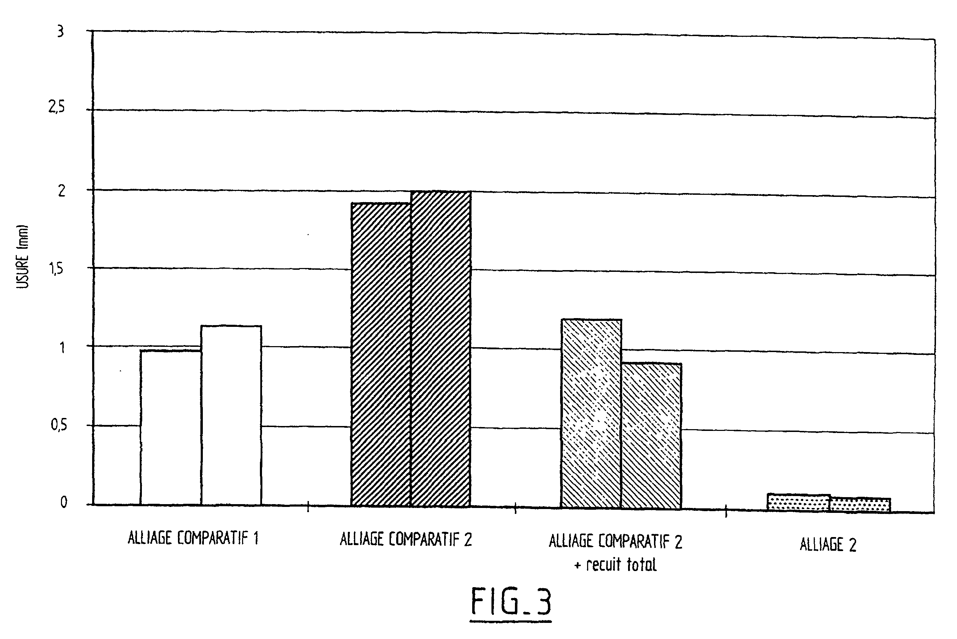

Les tests dont les résultats sont schématisés dans les figures 2 et 3 ont été conduits dans les conditions suivantes.
1°) Test de cycle d'endurance très long
   - vitesse de rotation du baladeur 2 : 4840 T/min
   - fréquence d'appui de la fourchette sous l'action du vérin 5 : 1 seconde de poussée, 0,4 seconde de relâchement
   - niveau d'huile (huile de boîte ou de transmission) : 1 cm au-dessus des patins de la fourchette F,
   - température de l'huile 90°±10°
   - effort et nombre de cycles : 55daN, 590.000 cycles puis 80 daN, 40.000 cycles
   - rugosité du baladeur telle que définie ci-dessus : 4
2°) Test d'effort exceptionnel
   - vitesse de rotation du baladeur : 3300 T/min
   - fréquence : 1,5 seconde de poussée, 2,1 secondes de relâchement
   - niveau d'huile : 1 cm au-dessous des patins de la fourchette
   - température de l'huile : démarrage à la température ambiante, température maximale : 110°C
   - rodage : 300 cycles à 70 daN
   - effort et nombre de cycles : 160 daN, 2000 cycles
   - rugosité du baladeur : 6,3

Pour les essais, on a réalisé deux alliages selon l'invention ayant les compositions suivantes en pourcentage en poids :

| Alliage 1 | |
|---|---|
| Al | 8 |
| Fe | 0 |
| Ni | 3,5 |
| Pb | 0,4 |
| Zn | 1,0 |
| Si | 0,4 |

le reste étant constitué par du cuivre et des impuretés inévitables.

| Alliage 2 | |
|---|---|
| Al | 8,5 |
| Fe | 0 |
| Ni | 4 |
| Pb | 0,4 |
| Zn | 1,2 |
| Si | 0,4 |

le reste étant constitué par du cuivre et des impuretés inévitables.

On a également réalisé des fourchettes en alliages conventionnels ayant les compositions suivantes en pourcentage en poids :

| Alliage comparatif 1 | |
|---|---|
| Al | 10 |
| Fe | 3 |

le reste étant constitué par du cuivre et des impuretés inévitables.

| Alliage comparatif 2 | |
|---|---|
| Al | 10 |
| Fe | 4 |
| Ni | 4 |

le reste étant constitué par du cuivre et des impuretés inévitables.

Ces alliages ont servi à la fabrication de fourchettes coulées par gravité dans un moule métallique (coquille).

Les fourchettes ont été éjectées dès solidification et refroidies à la température ambiante.

Pour les essais comparatifs on a réalisé dans les mêmes conditions des fourchettes en alliage comparatif 1 défini ci-dessus, revêtu de nickel chimique et en alliage comparatif 2 ayant subi un recuit total.

Les figures 2 et 3 représentent l'usure (perte d'épaisseur) mesurée en millimètres, à chaque fois pour les deux patins d'une fourchette dans les conditions de test indiquées précédemment. Les graphiques montrent clairement les meilleures propriétés de résistance à l'usure par frottement de fourchettes réalisées en alliage selon l'invention aussi bien pour les tests de cycle d'endurance très long que pour les tests d'effort exceptionnel.

## Revendications

1. Cupro-alliage pour la réalisation de pièces mécaniques présentant une résistance au frottement améliorée, **caractérisé par le fait qu'**il présente la composition suivante en pourcentage en poids :
| | |
|---|---|
| Al | 7,5 à 9,0 |
| Fe | 0 à 2,0 |
| Ni | 3 à 4,5 |
| Pb ou Bi | 0,2 à 0,6 |
| Zn 0,6 à 1,4 ou Sn | 1,2 à 2,8 |
| Si | 0,25 à 0,50 |
le reste étant constitué par du cuivre et des impuretés inévitables, la teneur en impuretés étant inférieure à 0,5.

2. Fourchette de boîte de vitesses de véhicules, **caractérisée par le fait qu'**elle est réalisée en cupro-alliage selon la revendication 1.

3. Fourchette de boîte de vitesses de véhicules selon la revendication 2, **caractérisée par le fait qu'**elle est réalisée par moulage en coquille en étant coulée par gravité.

## Patentansprüche

1. Kupferlegierung für die Realisierung von mechanischen Stücken, die eine verbesserte Reibungsbeständigkeit aufweisen, **dadurch gekennzeichnet, dass** sie die folgende Zusammensetzung in Gewichtsprozent aufweist:
| | | | |
|---|---|---|---|
| Al | 7,5 | bis | 9,0 |
| Fe | 0 | bis | 2,0 |
| Ni | 3 | bis | 4,5 |
| Pb oder Bi | 0,2 | bis | 0,6 |
| Zn 0,6 bis 1,4 oder Sn | 1,2 | bis | 2,8 |
| Si | 0,25 | bis | 0,50 |
wobei die Restmenge aus Kupfer und unvermeidlichen Verunreinigungen besteht, wobei der Gehalt an Verunreinigungen unterhalb von 0,5 liegt.

2. Schaltgabel für Fahrzeuge, **dadurch gekennzeichnet, dass** sie aus einer Kupferlegierung gemäß Anspruch 1 hergestellt ist.

3. Schaltgabel für Fahrzeuge gemäß Anspruch 2, **dadurch gekennzeichnet, dass** sie durch Kokillenguss hergestellt wird, wobei mittels Schwerkraft gegossen wird.

## Claims

1. Copper-based alloy for the production of mechanical parts with improved rubbing resistance, **characterized in that** it has the following composition, in percentage by weight:
| | | |
|---|---|---|
| Al | 7.5 | to 9.0 |
| Fe | 0 | to 2.0 |
| Ni | 3 | to 4.5 |
| Pb or Bi | 0.2 | to 0.6 |
| Zn 0.6 to 1.4 or Sn | 1.2 | to 2.8 |
| Si | 0.25 | to 0.50 |
the balance consisting of copper and inevitable impurities, the impurities content being below 0.5.

2. Vehicle gearbox fork, **characterized in that** it is made of a copper-based alloy according to Claim 1.

3. Vehicle gearbox fork according to Claim 2, **characterized in that** it is produced as a gravity-poured shell casting.
